# EUROPÄISCHE PATENTSCHRIFT

(11) **EP 3 775 756 B1**
(45) Veröffentlichungstag und Bekanntmachung des Hinweises auf die Patenterteilung: **31.05.2023**
(21) Anmeldenummer: 19714316.7
(22) Anmeldetag: 22.03.2019
(51) Int. Cl.: G01B 5/008

(54) **VORRICHTUNG UND VERFAHREN ZUR KOMPENSATION EINER GEWICHTSKRAFT MINDESTENS EINES VERTIKAL BEWEGLICHEN BAUTEILS EINES KOORDINATENMESSGERÄTS SOWIE KOORDINATENMESSGERÄT**
DEVICE AND METHOD FOR COMPENSATING THE WEIGHT OF AT LEAST ONE VERTICALLY MOVABLE COMPONENT OF A COORDINATE MEASURING DEVICE AND COORDINATE MEASURING DEVICE
DISPOSITIF ET PROCÉDÉ POUR COMPENSER UN POIDS D'AU MOINS UN ÉLÉMENT VERTICALEMENT MOBILE D'UN APPAREIL DE MESURE DE COORDONNÉES ET APPAREIL DE MESURE DE COORDONNÉES

(30) Priorität: 26.03.2018 DE 102018002431
(43) Veröffentlichungstag der Anmeldung: 17.02.2021
(73) Patentinhaber: WENZEL Metrology GmbH, 97859 Wiesthal (DE)
(72) Erfinder: KAISER, René, 97753 Karlstadt (DE)
(74) Vertreter: Weidner Stern Jeschke
(86) Internationale Anmeldenummer: PCT/EP2019/000090
(87) Internationale Veröffentlichungsnummer: WO 2019/185191

(56) Entgegenhaltungen:
- DE-A1-102007 057 849
- DE-A1-102015 223 081
- DE-B3-102008 062 763
- US-A- 1 241 574
- US-A- 1 722 250
- US-A- 4 502 570
- US-A- 4 964 221

## Beschreibung

Die vorliegende Erfindung betrifft eine Vorrichtung zur Kompensation einer Gewichtskraft mindestens eines vertikal beweglichen Bauteils eines Koordinatenmessgeräts, ein entsprechendes Verfahren und ein Koordinatenmessgerät.

Koordinatenmessgeräte werden zur Aufnahme der Raumkoordinaten von Messpunkten auf der Oberfläche von Messobjekten eingesetzt. Hierfür weist ein Koordinatenmessgerät (KMG) eine Grundstruktur zur Aufnahme des Messobjekts bzw. Werkstücks auf sowie eine Mehrzahl von antreibbaren Achsen, wodurch ein Tastkopf des Koordinatenmessgeräts innerhalb eines Messvolumens in beliebige Positionen relativ zum Messobjekt gebracht werden kann. Der Tastkopf kann einen Taster zur berührenden Antastung der Werkstückoberfläche aufnehmen oder beispielsweise einen optischen Sensor zur berührungslosen Antastung umfassen. Die Achsen des Koordinatenmessgeräts weisen üblicherweise Maßstäbe und Positionsgeber sowie elektromotorische Antriebe auf. Das Koordinatenmessgerät kann auch eine oder mehrere Drehachsen aufweisen, um das Werkstück relativ zum Taster bzw. Sensor durch eine rotatorische Bewegung auszurichten.

In der Regel umfasst das Koordinatenmessgerät eine vertikale Achse zur Bewegung des Tastkopfs in vertikaler Richtung. Die vertikale Achse, die auch als Z-Achse bezeichnet wird, umfasst insbesondere einen in vertikaler Richtung verschiebbaren Schlitten, der als Z-Schlitten bezeichnet wird und an welchem direkt oder indirekt der Tastkopf angeordnet ist und durch eine Bewegung des Z-Schlittens in vertikaler Richtung verlagert werden kann. Ein derartiges Koordinatenmessgerät weist gemäß einer verbreiteten Bauart drei aufeinander aufbauende, zueinander senkrechte lineare Achsen auf, wobei die Z-Achse auf den beiden anderen Achsen, die als X- bzw. Y-Achse bezeichnet werden, aufbaut und die Z-Achse somit insgesamt mittels der X- und der Y-Achse in horizontalen Richtungen bewegt werden kann. Gemäß anderen Bauarten trägt die Z-Achse die X- und/oder die Y-Achse, welche mittels der Z-Achse in vertikaler Richtung bewegt werden können.

Da die Z-Achse des Koordinatenmessgeräts in Richtung des Schwerefeldes der Erde gerichtet ist, wird der Z-Schlitten durch seine Gewichtskraft in Richtung auf seine untere Endposition belastet. Wenn die Gewichtskraft alleine durch den Antrieb der Z-Achse aufgenommen werden müsste, würde dies eine entsprechende Auslegung des Antriebs erfordern, was die Gesamtmasse der Z-Achse erheblich vergrößern würde. Ferner würde dies zu einem hohen Stromverbrauch für die notwendige Haltearbeit des Antriebsmotors und zur Freisetzung einer erheblichen Verlustwärme führen, was die Messgenauigkeit nachteilig beeinflussen würde. Schließlich könnte ein Stromausfall zu einem Sicherheitsrisiko durch eine unkontrollierte Abwärtsbewegung des Z-Schlittens unter dem Einfluss der Gewichtskraft führen. Koordinatenmessgeräte verfügen daher häufig über eine Vorrichtung zur Kompensation der Gewichtskraft des Z-Schlittens, die zumindest einen wesentlichen Anteil der Gewichtskraft aufnimmt und dadurch den Antriebsmotor der Z-Achse entlastet.

Zur Kompensation der Gewichtskraft des Z-Schlittens ist es beispielsweise bekannt, Gegengewichte vorzusehen, die mit dem Z-Schlitten gekoppelt sind. Hierdurch wird jedoch die bewegte Masse der Z-Achse näherungsweise verdoppelt, was für die Dynamik des Koordinatenmessgerätes nachteilig ist und insgesamt einen steiferen Aufbau erfordert.

Aus DE 44 089 12 A1 ist ein Koordinatenmessgerät mit einem pneumatischen Gewichtsausgleich für die vertikal verschiebliche Pinole bekannt, wofür ein Druckluftzylinder und ein an den Druckluftzylinder angeschlossenes Speichervolumen vorgesehen sind. Ein pneumatischer Gewichtsausgleich hat zum einen den Nachteil, dass eine Versorgung des Koordinatenmessgeräts mit Druckluft erforderlich ist, und zum anderen ist hierfür eine aufwändige Druckregelung über einen Präzisionsregler notwendig. Zudem kann aufgrund der erforderlichen Dichtungen ein Stick-Slip-Effekt aufgetreten, der die Genauigkeit der Positionierung des Tastkopfs beeinträchtigt.

In DE 2015 121 582 A1 wird vorgeschlagen, dass eine Einrichtung für den Gewichtsausgleich eines vertikal verschiebbaren Messschlittens eine Drehfeder mit einer an dieser exzentrisch befestigten Rolle umfasst, wobei von der Rolle ein Seil zu einem Flaschenzug und von diesem ein Seil zum Messschlitten geführt wird. Die exzentrische Rolle ist derart an der Drehfeder befestigt, dass während der Bewegung des Messschlittens das sich aufgrund der Federkennlinie ändernde Drehmoment der Feder durch eine Verkürzung bzw. Vergrößerung des Hebelarms in etwa aufgehoben wird.

Aus EP 0 360 976 A1 ist es bekannt, dass eine Einrichtung für den Gewichtsausgleich eines vertikal verschiebbaren Messschlittens eines Koordinatenmessgeräts eine Schraubenfeder enthält, deren Arbeitsbereich klein gegenüber ihrer Länge im unbelasteten Zustand ist, wobei zwischen die Feder und den Messschlitten ein untersetzendes Bandgetriebe geschaltet ist und der Antrieb des Messschlittens und die Feder jeweils mit einer Rolle des Bandgetriebes verbunden sind. Dabei ist es zur Kompensation der innerhalb des Arbeitsbereichs der Feder auftretenden Variation der Federkraft vorgesehen, dass diese durch eine exzentrische Lagerung einer Rolle des Bandgetriebes kompensiert ist.

Es hat sich jedoch gezeigt, dass die bekannten Lösungen insbesondere hinsichtlich der erforderlichen Masse der Feder, die die Masse der Z-Achse vergrößert, hinsichtlich des erforderlichen Bauraums sowie hinsichtlich der Gleichmäßigkeit der Kompensation der Gewichtskraft des Z-Schlittens nicht optimal sind.

Aus der DE 10 2015 223 081 A1 ist ein Koordinatenmessgerät mit einer Gewichtsausgleichseinrichtung für einen Messschlitten bekannt, wobei mittels eines mechanischen Kraftausgleichts eine Kompensation der Gewichtskraft des Messschlittens erreicht wird.

Die US 1,241,574 A offenbart einen Ausgleichsmechanismus für einen elektrischen Schmelzofen, wobei kegelförmige Trommeln für einen kontinuierlichen Gewichtsausgleich einer Schmelzelektrode genutzt werden.

Es ist Aufgabe der vorliegenden Erfindung, eine verbesserte Vorrichtung zur Kompensation einer Gewichtskraft mindestens eines vertikal beweglichen Bauteils eines Koordinatenmessgeräts sowie ein entsprechendes Verfahren und ein Koordinatenmessgerät anzugeben, wobei die genannten Nachteile möglichst vermieden werden.

Diese Aufgabe wird durch eine Vorrichtung gemäß Anspruch 1, durch ein Verfahren gemäß Anspruch 12 und durch ein Koordinatenmessgerät gemäß Anspruch 14 gelöst.

Vorteilhafte Weiterbildungen der Erfindung ergeben sich aus den Unteransprüchen.

Eine erfindungsgemäße Vorrichtung zur Kompensation einer Gewichtskraft mindestens eines vertikal beweglichen Bauteils eines Koordinatenmessgeräts dient als Gewichtsausgleich für das mindestens eine entlang der vertikalen Achse bewegliche Bauteil, das insbesondere ein in vertikaler Richtung beweglicher Schlitten ist, der beispielsweise den Tastkopf des Koordinatenmessgeräts tragen kann. Die vertikale Achse wird im Folgenden als Z-Achse bezeichnet und der Schlitten als Z-Schlitten. Die erfindungsgemäße Vorrichtung wird auch als Gewichtsausgleichsvorrichtung oder kurz als Gewichtsausgleich bezeichnet. Die erfindungsgemäße Vorrichtung dient insbesondere zur Kompensation der Gewichtskraft des mindestens einen vertikal beweglichen Bauteils entlang eines gesamten möglichen Verfahrwegs des Bauteils in Z-Richtung, d.h. im gesamten Verfahrbereich der Z-Achse, und somit zur Entlastung eines Antriebs der Z-Achse. Das mindestens eine vertikal bewegliche Bauteil bzw. der Z-Schlitten kann auch eine in Z-Richtung verschiebbare Pinole sein oder eine solche umfassen. Der Verfahrbereich in Z-Richtung entspricht insbesondere dem vertikalen Messbereich des Koordinatenmessgeräts und kann, je nach Messvolumen und Bauart des Koordinatenmessgeräts, von wenigen Zentimetern bis zu mehreren Metern betragen.

Die erfindungsgemäße Vorrichtung umfasst eine Feder mit einem ersten und einem zweiten Endbereich, wobei der zweite Endbereich dem ersten Endbereich der Feder entgegengesetzt angeordnet ist. Die Feder ist zur Ausübung einer elastischen Rückstellkraft zwischen dem ersten und dem zweiten Endbereich insbesondere bei einer Verlängerung der Feder ausgebildet. Der erste Endbereich der Feder ist mit einem vertikal feststehenden Bauteil des Koordinatenmessgeräts verbindbar. Das vertikal feststehende Bauteil ist insbesondere ein feststehendes Bauteil der Z-Achse, etwa eine Tragstruktur, die eine Führung für eine Bewegung des Z-Schlittens in Z-Richtung trägt, oder ein mit der Tragstruktur verbundenes, bei der Bewegung des Z-Schlittens in Z-Richtung nicht mitbewegtes Bauteil.

Die Vorrichtung umfasst weiterhin ein erstes Zugmittel, das insbesondere langerstreckt und flexibel ausgebildet ist, beispielsweise als Seil oder Band. Das erste Zugmittel ist mit dem zweiten Endbereich der Feder verbunden. Insbesondere weist das erste Zugmittel ein erstes Ende mit einem ersten Endabschnitt und ein dem ersten Ende entgegengesetztes zweites Ende mit einem zweiten Endabschnitt auf. Der erste Endabschnitt des ersten Zugmittels ist mit dem zweiten Endbereich der Feder verbunden, beispielsweise kann eine am ersten Ende des ersten Zugmittels gebildete Öse in einen am zweiten Endbereich der Feder vorhandenen Haken eingehängt sein. Die Feder greift somit zum Ausüben einer Zugkraft auf das erste Zugmittel einerseits an dem vertikal feststehenden Bauteil der Z-Achse und andererseits an dem ersten Zugmittel an, wobei die Zugkraft insbesondere eine elastische Rückstellkraft bei einer Verlängerung der Feder ist.

Die Vorrichtung umfasst ferner eine erste, näherungsweise konisch ausgebildete Trommel, an der das zweite Ende des ersten Zugmittels ansetzt und auf der das erste Zugmittel durch Drehung der ersten Trommel um ihre Achse aufwickelbar und durch entgegengesetzte Drehung von dieser wieder abwickelbar ist. Insbesondere kann der zweite Endabschnitt des ersten Zugmittels oder ein überwiegender Teil der Länge des ersten Zugmittels auf der ersten Trommel aufwickelbar und von dieser wieder abwickelbar sein. Die Feder übt dabei über das erste Zugmittel ein Drehmoment auf die erste Trommel aus. Der wirksame Hebelarm, mit dem das erste Zugmittel an der ersten Trommel angreift, ist insbesondere durch den entsprechenden Radius der Trommel gegeben. Die erste Trommel ist an einem oder mehreren in vertikaler Richtung feststehenden Bauteilen der vertikalen Achse, etwa an der Tragstruktur, die die Führung des Z-Schlittens trägt, drehbar gelagert.

Ferner umfasst die erfindungsgemäße Vorrichtung eine zweite, näherungsweise konisch ausgebildete Trommel, die ebenfalls an einem vertikal feststehenden Bauteil der vertikalen Achse drehbar gelagert ist und die bezüglich ihrer Rotationsbewegung mit der ersten Trommel gekoppelt ist. Die Feder übt somit über das erste Zugmittel und die erste Trommel ein Drehmoment auf die zweite Trommel aus, das beispielsweise gleich groß und gleich gerichtet wie das auf die erste Trommel ausgeübte Drehmoment sein kann. Die erste und die zweite Trommel sind insbesondere reibungsarm gelagert, beispielsweise mittels Kugel- oder Rollenlagern.

Weiterhin umfasst die erfindungsgemäße Vorrichtung ein zweites Zugmittel, das ebenfalls vorzugsweise langerstreckt und flexibel ausgebildet ist und beispielsweise ein Seil oder ein Band sein kann. Insbesondere weist das zweite Zugmittel ein erstes Ende mit einem ersten Endabschnitt und ein dem ersten Ende entgegengesetztes zweites Ende mit einem zweiten Endabschnitt auf. Das zweite Zugmittel setzt mit seinem ersten Ende an der zweiten Trommel an und ist auf dieser durch Drehung der zweiten Trommel um ihre Achse aufwickelbar und von dieser durch eine entgegengesetzte Drehung wieder abwickelbar. Insbesondere ist der erste Endabschnitt des zweiten Zugmittels in dieser Weise auf der zweiten Trommel aufwickelbar und von dieser wieder abwickelbar. Dabei setzen das erste und das zweite Zugmittel derart an der ersten bzw. zweiten Trommel an, dass das erste Zugmittel von der ersten Trommel abgewickelt wird, wenn das zweite Zugmittel auf der zweiten Trommel aufgewickelt wird, und umgekehrt. Eine Rotation der ersten Trommel zum Abwickeln des ersten Zugmittels führt aufgrund der Drehkopplung der ersten und der zweiten Trommel somit zum Aufwickeln des zweiten Zugmittels auf der zweiten Trommel, ebenso wie bei einer Drehung der ersten Trommel zum Aufwickeln des ersten Zugmittels das zweite Zugmittel von der zweiten Trommel abgewickelt wird. In diesem Sinne sind das erste und das zweite Zugmittel entgegengesetzt auf der ersten und auf der zweiten Trommel auf- und abwickelbar. Ein wirksamer Hebelarm, mit dem das zweite Zugmittel an der zweiten Trommel angreift, ist insbesondere durch den entsprechenden Radius der zweiten Trommel gegeben.

Das zweite Zugmittel ist mit dem mindestens einen in vertikaler Richtung beweglichen Bauteil zum Aufnehmen zumindest eines Teils der Gewichtskraft des Bauteils verbunden. Insbesondere kann das zweite Ende des zweiten Zugmittels an dem in vertikaler Richtung beweglichen Bauteil angreifen, wobei der zweite Endabschnitt des zweiten Zugmittels von dem Bauteil ausgehend in vertikaler Richtung nach oben gerichtet ist. Vorzugsweise greift das zweite Zugmittel direkt an dem in vertikaler Richtung beweglichen Bauteil an. Die Feder übt somit über das erste Zugmittel, die erste Trommel, die mit dieser drehgekoppelte zweite Trommel und das zweite Zugmittel eine Kraft auf das mindestens eine in vertikaler Richtung bewegliche Bauteil aus, das insbesondere der Z-Schlitten des Koordinatenmessgeräts sein kann, wobei die auf das Bauteil ausgeübte Kraft der Gewichtskraft des Bauteils entgegengesetzt gerichtet ist und zumindest einen Teil der Gewichtskraft kompensiert. Bei einer Bewegung des mindestens einen vertikal beweglichen Bauteils in Richtung der Gewichtskraft, also in negativer Z-Richtung, wird das zweite Zugmittel von der zweiten Trommel abgewickelt und das erste Zugmittel entgegen der Federkraft auf der ersten Trommel aufgewickelt. Umgekehrt wird bei einer Bewegung des vertikal beweglichen Bauteils entgegen der Gewichtskraft, also in positiver Z-Richtung, das erste Zugmittel durch die Federkraft von der ersten Trommel abgewickelt das zweite Zugmittel auf der zweiten Trommel aufgewickelt. Dabei werden das erste und das zweite Zugmittel durch die Federkraft bzw. durch die Gewichtskraft des mindestens einen vertikal beweglichen Bauteils gespannt.

Insbesondere kann die auf- und abwickelbare Länge des zweiten Zugmittels einem gesamten Verfahrbereich des vertikal beweglichen Bauteils in Z-Richtung entsprechen. Vorzugsweise entspricht die auf- und abwickelbare Länge des ersten Zugmittels dem dabei erfolgenden Hub der Feder. Der maximale Hub der Feder bei einer Z-Bewegung des vertikal beweglichen Bauteils, d.h. der Arbeitsbereich der Feder, kann hiervon unterschiedlich sein, beispielsweise kleiner als der Verfahrbereich in Z-Richtung.

Erfindungsgemäß ist die erste, näherungsweise konische Trommel derart ausgebildet, dass das erste Zugmittel mit einem Hebelarm an der ersten Trommel angreift, der abnimmt, wenn die aufgewickelte Länge des ersten Zugmittels zunimmt, und/oder die zweite, näherungsweise konische Trommel ist derart ausgebildet, dass das zweite Zugmittel mit einem Hebelarm an der zweiten Trommel angreift, der abnimmt, wenn die aufgewickelte Länge des zweiten Zugmittels zunimmt. Somit ist die erste und/oder die zweite Trommel derart ausgestaltet und das erste bzw. das zweite Zugmittel ist derart auf- und abwickelbar, dass bei fortschreitendem Aufwickeln des ersten Zugmittels auf der ersten Trommel der wirksame Hebelarm, mit dem das erste Zugmittel an der ersten Trommel angreift, geringer wird und dementsprechend beim Abwickeln des ersten Zugmittels von der ersten Trommel wieder zunimmt, und/oder beim Aufwickeln des zweiten Zugmittels auf der zweiten Trommel der wirksame Hebelarm, mit dem das zweite Zugmittel an der zweiten Trommel angreift, abnimmt und beim Abwickeln des zweiten Zugmittels entsprechend zunimmt. Der Hebelarm, mit dem das erste bzw. das zweite Zugmittel an der jeweiligen Trommel angreift, ist von der jeweils aufgewickelten Länge des betreffenden Zugmittels und somit vom Drehwinkel der betreffenden Trommel abhängig, d.h. von der Z-Position des mindestens einen vertikal beweglichen Bauteils und dementsprechend vom Hub der Feder, der mit der Z-Position gekoppelt ist. Insbesondere ist die erste und/oder die zweite Trommel zum Auf- bzw. Abwickeln des ersten bzw. zweiten Zugmittels über einen vom jeweiligen Drehwinkel der ersten bzw. zweiten Trommel abhängigen Radius ausgebildet, wobei derjenige Radius, an dem das aufgewickelte Zugmittel vom Umfang der jeweiligen Trommel tangential abhebt, als Hebelarm wirkt.

Dadurch, dass das erste und/oder das zweite Zugmittel an der näherungsweise konischen Trommel, auf der das jeweilige Zugmittel auf- bzw. von welcher es abgewickelt wird, mit einem bei Aufwicklung abnehmenden und bei Abwicklung zunehmenden Hebelarm angreift, wird es ermöglicht, die mit zunehmender Auslenkung der Feder auftretende Zunahme der Kraft, die die Feder auf das erste Zugmittel ausübt, zumindest teilweise auszugleichen. Hierdurch kann ein Gewichtsausgleich der vertikalen Achse ermöglicht werden, der eine gleichmäßigere Kompensation der Gewichtskraft des Z-Schlittens gewährleistet und zudem nur mit einer relativ geringen Vergrößerung der Masse der vertikalen Achse des Koordinatenmessgeräts verbunden ist. Insbesondere wird hierbei kein Gegengewicht benötigt; ein solcher Gewichtsausgleich kann daher auch als "masseloser" Gewichtsausgleich bezeichnet werden. Ferner wird hierdurch eine verbesserte Ausnutzung der Masse der Feder zur Kompensation der Gewichtskraft ermöglicht. Ein erfindungsgemäßer Gewichtsausgleich ist darüber hinaus vergleichsweise einfach aufgebaut und kann reibungsarm ausgestaltet sein. Weiterhin erfordert die erfindungsgemäße Vorrichtung nur einen relativ geringen Bauraum bzw. kann in einem beschränkten Bauraum in einem Gehäuse der Z-Achse untergebracht werden. Ein geringer verbleibender, nicht kompensierter oder überkompensierter Anteil der Gewichtskraft kann durch den Antrieb der Z-Achse aufgenommen werden.

Die Anordnung aus der ersten und der zweiten Trommel, die miteinander drehgekoppelt sind, sowie mit dem auf der ersten bzw. der zweiten Trommel auf- und abwickelbaren ersten und zweiten Zugmittel kann beispielsweise auch als Getriebe aufgefasst werden. In diesem Sinne betrifft die Erfindung eine Vorrichtung zur Kompensation einer Gewichtskraft mindestens eines vertikal beweglichen Bauteils eines Koordinatenmessgeräts, mit einer Feder, die über ein erstes und ein zweites Zugmittel sowie über ein Band- oder Seilgetriebe mit dem mindestens einen vertikal beweglichen Bauteil zur Aufnahme zumindest eines Teils der Gewichtskraft des Bauteils verbunden ist, wobei das Band- oder Seilgetriebe eine erste und eine zweite Trommel umfasst, auf der das erste und das zweite Zugmittel einander entgegengesetzt auf- und abwickelbar sind, und wobei das erste Zugmittel an der ersten Trommel und/oder das zweite Zugmittel an der zweiten Trommel mit einem mit einer aufgewickelten Länge des betreffenden Zugmittels abnehmenden Hebelarm angreift. Gemäß diesem Aspekt der Erfindung weist das Band- oder Seilgetriebe somit eine veränderliche Übersetzung auf, die eine Kompensation der Veränderung der von der Feder ausgeübten Kraft und damit eine gleichmäßigere Kompensation der Gewichtskraft des mindestens einen vertikal beweglichen Bauteils erlaubt.

Gemäß einer bevorzugten Ausführungsform der Erfindung sind beide Trommeln wie oben beschrieben ausgebildet, d.h. die erste und die zweite Trommel sind jeweils derart ausgebildet, dass das erste bzw. das zweite Zugmittel an der jeweiligen Trommel mit einem Hebelarm angreift, der mit einer zunehmenden aufgewickelten Länge des jeweiligen Zugmittels abnimmt. Dadurch, dass die erste und die zweite Trommel in der genannten Weise ausgebildet sind, wird einerseits eine besonders gleichmäßige Kompensation der Gewichtskraft des mindestens einen vertikal beweglichen Bauteils und andererseits eine besonders kompakte Bauform der Gewichtsausgleichsvorrichtung ermöglicht.

Vorzugsweise sind die Feder und die erste und die zweite Trommel derart ausgebildet, dass die vom zweiten Zugmittel auf das mindestens eine vertikal bewegliche Bauteil ausgeübte Kraft über den gesamten Verfahrbereich in Z-Richtung im Wesentlichen unabhängig von einer vertikalen Position des Bauteils ist. Dies bedeutet insbesondere, dass die Abhängigkeit der Hebelarme, mit denen das erste Zugmittel an der ersten Trommel und das zweite Zugmittel an der zweiten Trommel angreifen, vom jeweiligen Drehwinkel der betreffenden Trommel derart gewählt ist, dass die über die erste und die zweite Trommel in das zweite Zugmittel eingeleitete Kraft zumindest näherungsweise von den Drehwinkeln unabhängig ist und die Abhängigkeit der von der Feder in das erste Zugmittel eingeleiteten Zugkraft von der Auslenkung der Feder ausgleicht. In besonders bevorzugter Weise entspricht die vom zweiten Zugmittel auf das mindestens eine vertikal bewegliche Bauteil in vertikaler Richtung ausgeübte Kraft zumindest näherungsweise der Gewichtskraft des Bauteils und ist dieser entgegengesetzt gerichtet, so dass eine besonders weitgehende Kompensation der Gewichtskraft des Bauteils, beispielsweise des Z-Schlittens, ermöglicht wird.

In vorteilhafter Weise ist die zweite Trommel derart ausgebildet, dass bei einer Vertikalbewegung des mindestens einen vertikal beweglichen Bauteils über seinen gesamten Verfahrbereich die zweite Trommel eine Drehung um mehr als 180°, besonders bevorzugt um mehr als 360°, insbesondere 2 bis 3 volle Umdrehungen ausführt. In besonders bevorzugter Weise kann es vorgesehen sein, dass dabei zugleich die erste Trommel eine Drehung um einen entsprechenden Winkelbetrag ausführt. Hierdurch wird eine besonders platzsparende Bauweise ermöglicht, auch in dem Fall, dass ein großer Verfahrbereich in Z-Richtung vorgesehen ist.

Vorzugsweise sind die erste und die zweite Trommel drehfest miteinander verbunden und um eine gemeinsame Achse drehbar an dem feststehenden Bauteil der vertikalen Achse gelagert. Die erste und die zweite Trommel können insbesondere als Abschnitte einer einzigen Trommel ausgebildet sein, die beispielsweise einstückig hergestellt sein kann. Die Drehwinkel, um die die erste und die zweite Trommel beim Auf- und Abwickeln des ersten bzw. des zweiten Zugmittels gedreht werden, sind somit jeweils gleich. Hierdurch wird ein besonders einfacher, stabiler und raumsparender Aufbau der Gewichtsausgleichsvorrichtung ermöglicht. Das erste und das zweite Zugmittel können auch als zwei Abschnitte eines durchgehenden Zugmittels ausgebildet sein, beispielsweise eines durchgehenden Zugseils oder Bands, das in einem zwischen den beiden Abschnitten angeordneten Bereich mit einer Umfangsfläche der Trommel verbunden ist.

Erfindungsgemäß sind die erste und/oder die zweite Trommel, vorzugsweise beide Trommeln, näherungsweise konisch ausgebildet. Die erste und/oder die zweite Trommel stellen somit zumindest näherungsweise Wickelkegel dar, auf denen das erste bzw. das zweite Zugmittel mit einem veränderlichen Radius und daher einem veränderlichem Hebelarm aufgewickelt werden können. Hierdurch wird auf einfache Weise eine gleichmäßige Kompensation der Gewichtskraft des mindestens einen vertikal beweglichen Bauteils ermöglicht.

Weiterhin ist es bevorzugt, dass die erste und/oder die zweite Trommel eine spiralförmige Führungsrille oder Führungsnut aufweisen, in der das erste bzw. zweite Zugmittel beim Aufwickeln geführt ist; in besonders bevorzugter Weise weisen beide Trommeln jeweils eine derartige spiralförmige Führungsrille zur Führung des betreffenden Zugmittels auf. Insbesondere ist die Führungsrille so ausgestaltet, dass benachbarte Wicklungen des aufgewickelten jeweiligen Zugmittels voneinander einen Abstand aufweisen. Die spiralförmige Führungsrille verläuft dabei derart, dass entlang der Führungsrille, in die sich das jeweilige Zugmittel beim Aufwickeln fortschreitend einlegt, der zur Achse der jeweiligen Trommel gemessene Radius abnimmt. Hierdurch kann eine besonders genaue und reproduzierbare Kompensation der Gewichtskraft des mindestens einen vertikal beweglichen Bauteils erreicht werden und zudem eine Berührung aufeinander folgender Wicklungen des Zugmittels vermieden werden.

Vorzugsweise ist das Verhältnis zwischen einem maximalen und einem minimalen Radius der zweiten Trommel größer als 1,0 und kleiner als 4,0, weiter vorzugsweise größer als 2,0 und kleiner als 3,0, besonders bevorzugt näherungsweise gleich 2,5. Alternativ oder zusätzlich ist in bevorzugter Weise das Verhältnis zwischen einem maximalen und einem minimalen Radius der ersten Trommel größer als 1,0 und kleiner als 4,0, vorzugsweise größer als 1,3 und kleiner als 2,0, besonders bevorzugt näherungsweise etwa gleich 1,5 oder 1,6. Weiter alternativ oder zusätzlich ist in vorteilhafter Weise das Verhältnis zwischen einem maximalen Radius der ersten oder der zweiten Trommel und einem minimalen Radius der ersten oder der zweiten Trommel, d.h. zwischen dem größeren der maximalen Radien der ersten und der zweiten Trommel und dem kleineren der minimalen Radien der ersten und der zweiten Trommel, größer als 1,0 und kleiner als 4,0, vorzugsweise größer als 2,0 und kleiner als 3,5, besonders bevorzugt näherungsweise gleich 3,0. Dabei ist der minimale Radius der ersten bzw. zweiten Trommel der jeweilige minimale Radius, mit dem das betreffende Zugmittel auf der jeweiligen Trommel aufgewickelt werden kann, und entsprechend ist der maximale Radius der ersten bzw. zweiten Trommel der jeweilige maximale Radius, mit dem das betreffende Zugmittel auf der jeweiligen Trommel aufgewickelt werden kann. Der minimale bzw. maximale Radius entspricht insbesondere dem jeweiligen minimalen bzw. maximalen Hebelarm, mit dem das betreffende Zugmittel an der jeweiligen Trommel angreift. Dadurch, dass das Verhältnis der betreffenden Radien bzw. Hebelarme entsprechend den genannten Bereichen bzw. Werten gewählt ist, kann einerseits ein besonders kompakter Aufbau der Gewichtsausgleichsvorrichtung bei gegebenem Verfahrbereich der Z-Achse ermöglicht werden und zugleich eine übermäßige Biegung des jeweiligen Zugmittels beim Auf- und Abwickeln, die zu einer Verringerung der Lebensdauer des Zugmittels führen könnte, vermieden werden.

In besonders bevorzugter Weise ist eine wirksame Länge der Feder einstellbar. Zu diesem Zweck kann die Feder über eine Einstellvorrichtung mit dem vertikal feststehenden Bauteil der vertikalen Achse des Koordinatenmessgeräts verbunden sein. Hierdurch wird es ermöglicht, bei der Montage oder Inbetriebnahme der Gewichtsausgleichsvorrichtung die von der Feder ausgeübte Kraft an das Gewicht des vertikal beweglichen Bauteils anzupassen, wodurch beispielsweise Toleranzen der Feder oder anderer Bauteile ausgeglichen werden können. Ferner kann es vorgesehen sein, dass die wirksame Länge der Feder im Betrieb des Koordinatenmessgeräts einstellbar ist, wodurch der Gewichtsausgleich an das Gewicht unterschiedlicher Tastköpfe, Tasterkonfigurationen oder Sensoren angepasst werden kann. Hierdurch kann in einer Vielzahl von Situationen ein besonders genauer Gewichtsausgleich ermöglicht werden.

Vorzugsweise ist die Feder als Schraubenfeder ausgebildet, und in besonders bevorzugter Weise ist weiterhin der erste Endbereich der Feder über einen in diese einschraubbaren Gewindekolben mit dem vertikal feststehenden Bauteil des Koordinatenmessgeräts verbunden. Dadurch, dass der Gewindekolben in die Feder einschraubbar ist, kann die Zahl der wirksamen Windungen der Schraubenfeder und somit die wirksame Länge der Feder und dadurch die Federkonstante eingestellt werden. Insbesondere kann hierdurch eine stufenlose Einstellung der wirksamen Länge der Feder ermöglicht werden. In besonders bevorzugter Weise kann der Gewindekolben einstellbar mit dem vertikal feststehenden Bauteil des Koordinatenmessgeräts verbunden sein; insbesondere kann eine Position des Gewindekolbens relativ zum vertikal feststehenden Bauteil in einer Längsrichtung des Gewindekolbens einstellbar sein, etwa mittels einer Einstellmutter. Hierdurch kann auf einfache Weise eine Einstellung des Gewichtsausgleichs zum Ausgleich von Toleranzen und/oder zur Anpassung an das Gewicht unterschiedlicher Tastköpfe, Tasterkonfigurationen oder Sensoren erfolgen.

In vorteilhafter Weise kann das zweite Zugmittel über mindestens eine Umlenkrolle geführt sein, die an einem in vertikaler Richtung feststehenden Bauteil der vertikalen Achse, etwa an der Tragstruktur, drehbar gelagert ist, vorzugsweise reibungsarm gelagert, etwa mittels Kugel- oder Rollenlager. So kann das zweite Zugmittel beispielsweise ausgehend von dem in vertikaler Richtung beweglichen Bauteil, zunächst in vertikaler Richtung nach oben verlaufen, über die mindestens eine Umlenkrolle in näherungsweise vertikale Richtung nach unten umgelenkt sein und aus dieser Richtung an der zweiten Trommel ansetzen. Weiter vorzugsweise können die erste und die zweite Trommel drehfest miteinander verbunden und mit einer horizontalen Drehachse gelagert sein, und ferner kann das zweite Zugmittel ausgehend von der zweiten Trommel in vertikaler Richtung nach oben verlaufen, wobei die Feder ebenfalls vertikal angeordnet sein kann. Hierdurch werden eine besonders platzsparende Bauweise und eine besonders günstige Raumausnutzung ermöglicht.

Ein erfindungsgemäßes Verfahren zur Kompensation einer Gewichtskraft mindestens eines vertikal beweglichen Bauteils eines Koordinatenmessgeräts bezieht sich auf ein Koordinatenmessgerät, das eine wie oben beschrieben ausgestaltete Vorrichtung zur Kompensation der Gewichtskraft des mindestens einen vertikal beweglichen Bauteils aufweist. Zur Positionierung des Tastkopfs beispielsweise zum Aufnehmen eines Messpunkts werden die Achsen des Koordinatenmessgeräts bewegt, insbesondere wird das mindestens eine vertikal bewegliche Bauteil, beispielsweise der Z-Schlitten, in vertikaler Richtung bewegt. Bei einer Bewegung des mindestens einen vertikal beweglichen Bauteils in einer vertikalen Richtung entgegen der Gewichtskraft, d.h. in positiver Z-Richtung, wird gemäß dem erfindungsgemäßen Verfahren das zweite Zugmittel auf der zweiten, näherungsweise konischen Trommel aufgewickelt, das erste Zugmittel von der ersten, näherungsweise konischen Trommel abgewickelt und eine Auslenkung der Feder verringert, wobei ein Hebelarm, mit dem das zweite Zugmittel an der zweiten Trommel angreift, abnimmt und/oder ein Hebelarm, mit dem das erste Zugmittel an der ersten Trommel angreift, zunimmt. Bei einer Bewegung des mindestens einen vertikal beweglichen Bauteils in vertikaler Richtung in Richtung der Gewichtskraft, d.h. in negativer Z-Richtung, wird erfindungsgemäß das zweite Zugmittel von der zweiten, näherungsweise konischen Trommel abgewickelt, das erste Zugmittel auf der ersten, näherungsweise konischen Trommel aufgewickelt und eine Auslenkung der Feder vergrößert, wobei ein Hebelarm, mit dem das zweite Zugmittel an der zweiten Trommel angreift, zunimmt und/oder ein Hebelarm, mit dem das erste Zugmittel an der ersten Trommel angreift, abnimmt. Hierdurch wird eine gleichmäßigere Kompensation der Gewichtskraft des vertikal beweglichen Bauteils ermöglicht, wodurch beispielsweise ein verringerter Stromverbrauch, eine erhöhte Genauigkeit der mit dem Koordinatenmessgerät aufgenommenen Koordinaten der Messpunkte und eine erhöhte Sicherheit erreicht werden können.

Gemäß einer bevorzugten Ausführungsform des erfindungsgemäßen Verfahrens wird vor der Bewegung des mindestens einen vertikal beweglichen Bauteils in der vertikalen Richtung eine wirksame Länge der Feder eingestellt. Dies kann bereits bei der Montage oder bei einer Inbetriebnahme oder auch beim Betrieb des Koordinatenmessgeräts erfolgen, beispielsweise bei einer als Schraubenfeder ausgebildeten Feder in der oben beschriebenen Weise durch Drehen des Gewindekolbens. Hierdurch können Toleranzen ausgeglichen bzw. der Gewichtsausgleich an das Gewicht unterschiedlicher Tastköpfe, Tasterkonfigurationen oder Sensoren angepasst und dadurch ein besonders genauer Gewichtsausgleich ermöglicht werden.

Ein erfindungsgemäßes Koordinatenmessgerät weist mindestens ein vertikal bewegliches Bauteil, insbesondere einen Z-Schlitten, auf und umfasst eine Vorrichtung zur Kompensation der Gewichtskraft des Bauteils, die wie zuvor beschrieben ausgebildet ist. Im Übrigen kann das Koordinatenmessgerät in an sich bekannter Weise aufgebaut sein und beispielsweise drei aufeinander aufbauende, zueinander senkrechte lineare Achsen umfassen, wobei die Z-Achse in Richtung des Schwerefeldes der Erde gerichtet ist. Dadurch, dass das erste und/oder das zweite Zugmittel an der ersten bzw. der zweiten Trommel mit einem bei Aufwicklung abnehmenden und bei Abwicklung zunehmenden Hebelarm angreift, wird ein zumindest teilweiser Ausgleich der Veränderung der von der Feder ausgeübten Kraft bei Bewegung des Bauteils in Z-Richtung und damit ein besonders gleichmäßiger Gewichtsausgleich der Z-Achse ermöglicht. Auf diese Weise kann ein Antrieb der Z-Achse entlastet werden und der Stromverbrauch für die notwendige Haltearbeit verringert werden. Hierdurch kann auch die Wärmeentwicklung im Bereich der Z-Achse verringert werden, wodurch die Genauigkeit des Koordinatenmessgeräts verbessert werden kann. Ferner kann die Sicherheit bei einem Stromausfall erhöht werden. Da für den Gewichtsausgleich kein Gegengewicht und nur ein vergleichsweise geringer Bauraum benötigt wird, können zudem der konstruktive Aufbau des Koordinatenmessgeräts vereinfacht und die bewegte Masse verringert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung eines bevorzugten Ausführungsbeispiels und der beigefügten Zeichnung. Es zeigen:
Fig. 1 beispielhaft ein Koordinatenmessgerät mit einer Gewichtsausgleichsvorrichtung gemäß einem Ausführungsbeispiel der Erfindung in einer teilweise aufgeschnittenen Schrägansicht;
Fig. 2a und 2b die Gewichtsausgleichsvorrichtung des Koordinatenmessgeräts gemäß Fig. 1 in zwei Schnittansichten;
Fig. 3 eine vergrößerte Ansicht der Primär- und der Sekundär-Trommel aus Fig. 2a und 2b;
Fig. 4a und 4b in symbolischer Form die Funktionsweise der Gewichtsausgleichsvorrichtung gemäß Fig. 1 bis 3.

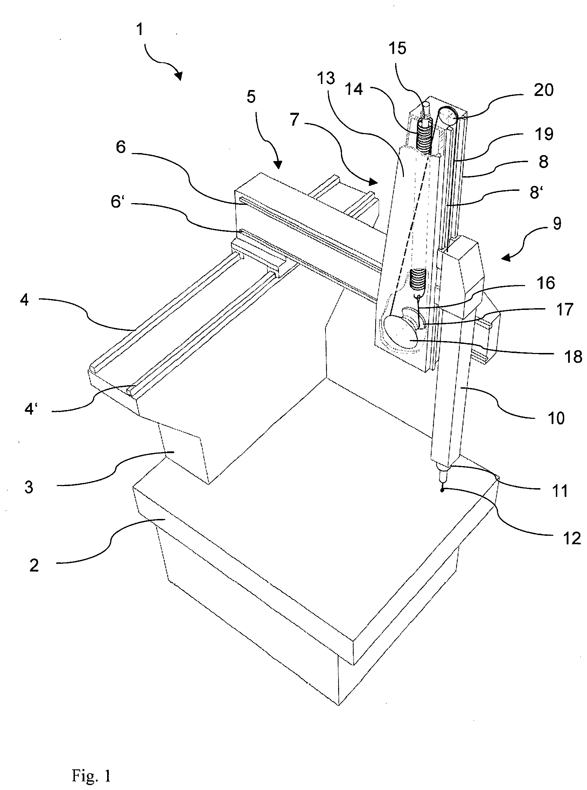

In Fig. 1 ist beispielhaft ein erfindungsgemäßes Koordinatenmessgerät gezeigt. Das Koordinatenmessgerät 1 umfasst eine Grundstruktur mit einem Tisch 2 zur Aufnahme eines nicht dargestellten Werkstücks und mit einer feststehenden Säule 3. Die Säule 3 trägt geradlinige Führungen 4, 4', an denen ein Schlitten 5 in einer horizontalen Richtung, die hier als X-Richtung bezeichnet wird, verschiebbar gelagert ist; der Schlitten 5 wird daher auch als X-Schlitten bezeichnet. Der X-Schlitten 5 trägt zwei geradlinige Führungen 6, 6', an denen ein weiterer Schlitten 7 in einer zur X-Richtung senkrechten horizontalen Richtung, die hier als Y-Richtung bezeichnet wird, verschiebbar gelagert ist; der Schlitten 7 wird dementsprechend als Y-Schlitten bezeichnet. Der Y-Schlitten 7 trägt wiederum zwei geradlinige Führungen 8, 8', an denen ein Z-Schlitten 9 in vertikaler Richtung, die als Z-Richtung bezeichnet wird, verschiebbar gelagert ist. Der Z-Schlitten 9 umfasst eine vertikal nach unten gerichtete Pinole 10, die den Tastkopf 11 trägt. Die Führungen der Achsen können beispielsweise als Wälz- oder Gleitführung, mit Luftlagern oder mit einer hydrostatischen Lagerung ausgebildet sein. Zusätzlich sind den jeweiligen Führungen bzw. Achsen Maßstäbe und Antriebe zugeordnet, die in Fig. 1 nicht dargestellt sind. Durch Bewegung der X-, Y- und Z-Achse kann der Tastkopf 11 in eine beliebige Position innerhalb eines Messvolumens gebracht werden, um das Werkstück mit dem Tastelement 12 anzutasten und durch Auslesen der Maßstabswerte die Raumkoordinaten eines Antastpunkts zu gewinnen. Die Erfindung ist nicht auf die dargestellte Bauform eines Koordinatenmessgeräts beschränkt.

Um einen großen Verschiebeweg des Z-Schlittens 9 und damit ein in vertikaler Richtung großes Messvolumen zu ermöglichen, erstreckt sich der Y-Schlitten turmartig nach oben. Innerhalb eines Gehäuses 13 des Y-Schlittens 7, das in Fig. 1 teilweise durchbrochen darstellt ist, ist eine Vorrichtung zur Kompensation des Gewichts des Z-Schlittens 9, einschließlich der Pinole 10, des Tastkopfs 11 und des Tastelements 12, angeordnet. Diese umfasst eine Schraubenfeder 14, die über einen in ihren oberen Endbereich eingeschraubten Gewindekolben 15 an einer Tragstruktur des Y-Schlittens 7 befestigt ist. Wie in Fig. 1 gezeigt, kann das Gehäuse 13 zugleich die Tragstruktur darstellen. Die Tragstruktur kann jedoch auch beispielsweise eine eigene Baugruppe bilden, an der die Führungen 8, 8' und das Gehäuse 13 sowie weitere Bauteile des Y-Schlittens 7 befestigt sind. In einen am unteren Ende der Schraubenfeder 14 befindlichen Haken ist ein erstes Zugseil 16 eingehängt, das an einer ersten Trommel ansetzt und auf dieser aufgewickelt ist, die hier als Primärtrommel 17 bezeichnet wird. Die Primärtrommel 17 ist fest mit einer zweiten Trommel verbunden, die hier als Sekundärtrommel 18 bezeichnet wird, an der ein zweites Zugseil 19 ansetzt und auf dieser aufgewickelt werden kann. Das zweite Zugseil 19 ist über eine im oberen Teil des Y-Schlittens 7 angeordnete Umlenkrolle 20 geführt und verläuft von dort in senkrechter Richtung nach unten, wo es an dem Z-Schlitten 9 befestigt ist. Die von der Schraubenfeder 14 ausgeübte Kraft wird somit über das erste Zugseil 16, die Primärtrommel 17, die Sekundärtrommel 18 und das zweite Zugseil 19 auf den Z-Schlitten 9 übertragen.

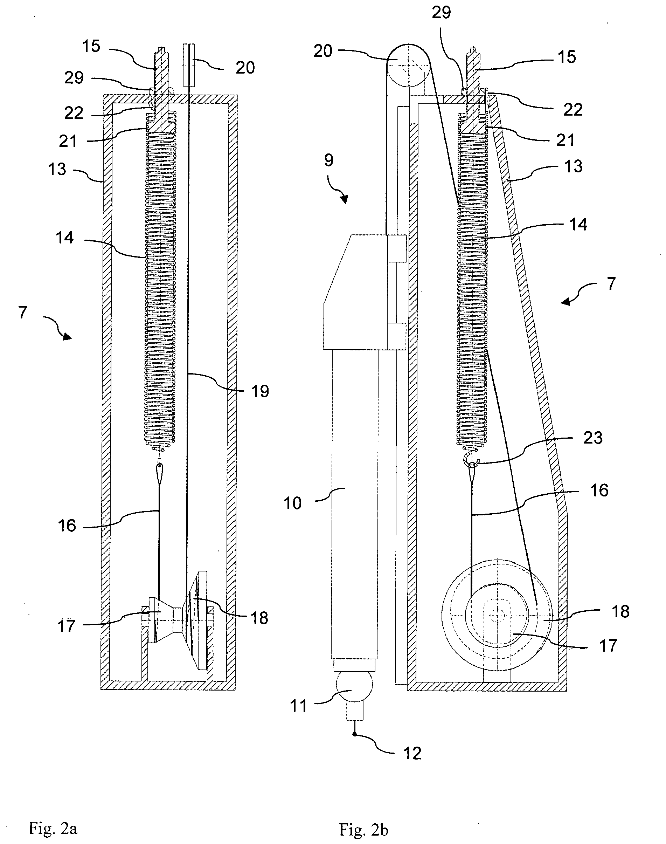

Die dargestellte Gewichtsausgleichsvorrichtung ist derart ausgestaltet, insbesondere sind die Schraubenfeder 14, die Primärtrommel 17 und die Sekundärtrommel 18 derart ausgebildet und aufeinander abgestimmt, dass die vom zweiten Zugseil 19 auf den Z-Schlitten 9 übertragene Kraft weitgehend unabhängig von der Z-Position des Z-Schlittens 9 ist und möglichst genau dem Gewicht des Z-Schlittens 9 entspricht. Hierdurch kann der Z-Schlitten 9 in jeder Position innerhalb seines Verfahrbereichs gehalten und die Gewichtskraft des Z-Schlittens 9 kompensiert werden, ohne dass der Antrieb der Z-Achse hierzu wesentlich beitragen müsste. Die in Fig. 1 angedeutete Gewichtsausgleichsvorrichtung wird im Folgenden anhand der Figuren 2a bis 4b näher erläutert.

Die Figuren 2a und 2b zeigen den Y-Schlitten 7 des Koordinatenmessgeräts 1 aus Fig. 1 in zwei Schnittansichten mit jeweils vertikaler Schnittebene, wobei die beiden Schnittebenen senkrecht aufeinander stehen. Wie in Fig. 2a und 2b gezeigt ist, ist in den oberen Endbereich der vertikal gerichteten Schraubenfeder 14 der Gewindekolben 15 eingeschraubt, der an der Tragstruktur des Y-Schlittens 7 bzw. der Z-Achse gehalten ist. In seinem unteren Endbereich weist der Gewindekolben 15 ein Außengewinde 21 auf, mit dem er in den oberen Endbereich der Schraubenfeder 14 eingeschraubt ist. Mit einer Einstellmutter 29 kann die vertikale Position des Gewindekolbens 15 eingestellt und fixiert werden. Ein oberer Haken 22 der Schraubenfeder kann zusätzlich zur Sicherung dienen. In den unteren Haken 23 der Schraubenfeder 14 ist das erste Zugseil 16 mit seinem ersten Ende, das mit einer Kausche verstärkt sein kann, eingehängt; mit seinem zweiten Ende ist das erste Zugseil 16 an der Primärtrommel 17 befestigt. Durch Rotation der Primärtrommel 17 ist das erste Zugseil 16 auf dieser aufwickelbar, wie in Fig. 2a symbolisch angedeutet ist. Die Primärtrommel 17 und die Sekundärtrommel 18 sind fest miteinander verbunden und an dem Gehäuse 13 um ihre gemeinsame Achse drehbar gelagert. An der Sekundärtrommel 18 ist das zweite Zugseil 19 mit seinem ersten Ende befestigt und ist auf der Sekundärtrommel 18 aufwickelbar. Das zweite Zugseil 19 erstreckt sich bis in den oberen Bereich des Y-Schlittens 7, wird dort über die Umlenkrolle 20 nach unten umgelenkt und greift mit seinem zweiten Ende an dem Z-Schlitten 9 an.

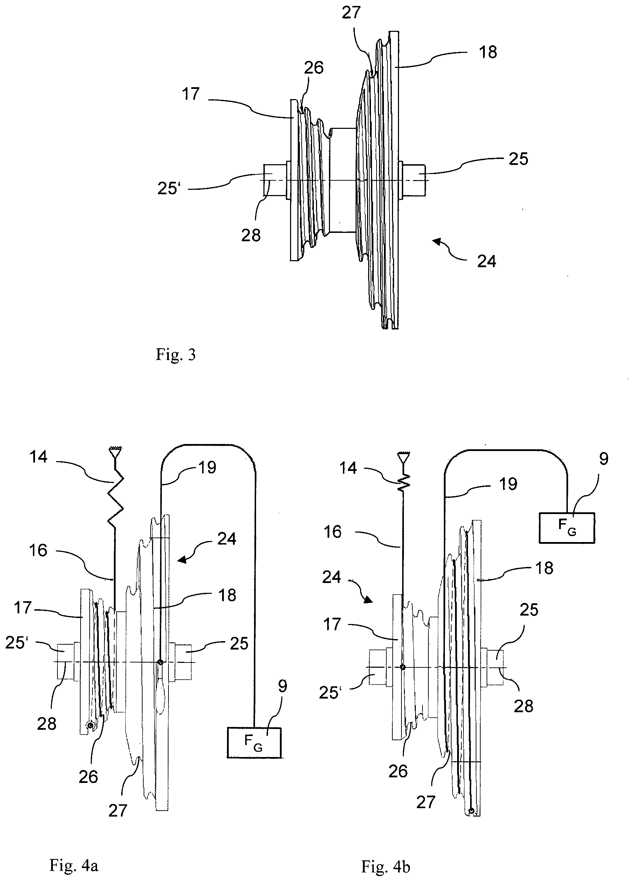

Die Primär- und die Sekundärtrommel 17, 18 sind in Fig. 3 vergrößert dargestellt. Die Primärtrommel 17 und die Sekundärtrommel 18 sind fest miteinander verbunden und bilden zwei Abschnitte einer gemeinsamen Trommel 24, die die Lagerzapfen 25, 25' aufweist, die die gemeinsame Drehachse der Primär- und der Sekundärtrommel 17, 18 definieren und mit denen diese an der Tragstruktur des Y-Schlittens 7 beispielsweise mittels Kugellagern drehbar gelagert sind. Sowohl die Primärtrommel 17 als auch die Sekundärtrommel 18 sind jeweils näherungsweise konisch ausgebildet und bilden somit jeweils einen Wickelkegel, wobei die Spitzen der beiden Wickelkegel einander zugewandt sind. An der Umfangsfläche der Primärtrommel 17 ist eine spiralförmige Führungsrille angeordnet, die hier als Primärspirale 26 bezeichnet wird. Die Sekundärtrommel 18 weist an ihrer Umfangsfläche ebenfalls eine spiralförmige Führungsrille auf, welche hier als Sekundärspirale 27 bezeichnet wird. Die Primärspirale 26 und die Sekundärspirale 27 dienen zum geführten Aufwickeln des ersten Zugseils 16 auf der Primärtrommel 17 bzw. des zweiten Zugseils 19 auf der Sekundärtrommel 18.

In Fig. 4a und 4b ist das Funktionsprinzip des Gewichtsausgleichs dargestellt, wobei in Fig. 4a symbolisch die Situation gezeigt ist, wenn sich der Z-Schlitten 9 am unteren Ende seines Verfahrbereichs in Z-Richtung befindet und in Fig. 4b die Situation, wenn sich der Z-Schlitten 9 am oberen Ende seines Verfahrbereichs befindet. Das der Schraubenfeder 14 abgewandte zweite Ende des ersten Zugseils 16 ist im äußeren Bereich der Primärtrommel 17, d.h. im Bereich des größten Radius der Primärspirale 26, befestigt. Das der Befestigung des zweiten Zugseils 19 an dem Z-Schlitten 9 entgegengesetzte erste Ende des zweiten Zugseils 19 ist im äußeren Bereich der Sekundärtrommel 18 an dieser befestigt, d.h. im Bereich des größten Radius der Sekundärspirale 27. Wenn sich der Z-Schlitten 9 in seiner unteren Endposition befindet, so hat die Schraubenfeder 14 ihre größte Länge, das erste Zugseil 16 ist maximal aufgewickelt und das zweite Zugseil 19 maximal abgewickelt (s. Fig. 4a). Dementsprechend befindet sich dann, wenn der Z-Schlitten 9 seine obere Endposition einnimmt, die Schraubenfeder 14 im Zustand ihrer geringsten Länge, das erste Zugseil 16 ist maximal abgewickelt und das zweite Zugseil 19 ist maximal aufgewickelt (s. Fig. 4b). Zwischen den beiden gezeigten Situationen hat sich die Trommel 24 mit der Primär- und der Sekundärtrommel 17, 18 um zwei ganze und eine Viertelumdrehung, d.h. um einen Drehwinkel von 810° gedreht.

In der in Fig. 4a gezeigten Situation ist die Zugkraft, die die Schraubenfeder 14 auf das erste Zugseil 16 ausübt, größer als die Kraft in der in Fig. 4b dargestellten Situation. Andererseits greift das erste Zugseil 16 in dem in Fig. 4a gezeigten Zustand mit einem wirksamen Hebelarm, der etwa dem kleinsten Radius der Primärspirale 26 entspricht, an der Primärtrommel 17 an, und das zweite Zugseil 19 greift mit einem wirksamen Hebelarm, der etwa dem größten Radius der Sekundärspirale 27 entspricht, an der Sekundärtrommel 18 an. Der jeweilige Radius bezieht sich dabei auf die gemeinsame Drehachse 28 der Primär- und der Sekundärtrommel 17, 18 und denjenigen Punkt der Primär- bzw. der Sekundärspirale 26, 27, in dem das erste Zugseil 16 bzw. das zweite Zugseil 17 tangential von der Primär- bzw. der Sekundärtrommel 17, 18 abhebt. Durch die zwischen den beiden gezeigten Situationen unterschiedlichen Radien bzw. Hebelarme wird der Unterschied zwischen der maximalen und der minimalen von der Schraubenfeder 14 auf das erste Zugseil 16 ausgeübten Kraft gerade kompensiert, so dass auf das zweite Zugseil 19 in den beiden dargestellten Situationen die gleiche Kraft wirkt. Insgesamt ist die Abhängigkeit des Radius des Primär- und der Sekundärspirale 26, 27 vom Drehwinkel der Trommel 24 derart gewählt, dass auch in den Zwischenpositionen, wenn sich der Z-Schlitten 9 zwischen der oberen und der unteren Endposition befindet, vom zweiten Zugseil 19 stets näherungsweise die gleiche Kraft auf den Z-Schlitten 9 ausgeübt wird. Die Schraubenfeder 14 ist dabei derart ausgelegt, dass die vom zweiten Zugseil 19 ausgeübte Kraft näherungsweise der Gewichtskraft F_{G} des Z-Schlittens 9 entspricht. Auf diese Weise wird die Gewichtskraft F_{G} des Z-Schlittens 9 kompensiert, so dass der Antrieb der Z-Achse weitgehend entlastet wird.

In der Tabelle I sind beispielhaft Zahlenwerte für die Abhängigkeit des Radius der Primär- und der Sekundärspirale 26, 27 vom Drehwinkel der Trommel 24 bzw. der Primär- und der Sekundärtrommel 17, 18 angegeben. Der Drehwinkel 0° entspricht der in Fig. 4a gezeigten Situation, während der Drehwinkel 810° der Situation in Fig. 4b entspricht. Wie sich aus der Tabelle I ergibt, kann durch die entsprechende Ausgestaltung der Primär- und der Sekundärspirale 26, 27 eine Variation der von der Schraubenfeder 14 ausgeübten Kraft um mehr als einen Faktor 5 kompensiert werden. Hierdurch kann bei einem maximalen Hub der Schraubenfeder 14 von 407 mm in einem Verfahrbereich des Z-Schlittens 9 von 782 mm eine Kompensation der Gewichtskraft F_{G} des Z-Schlittens 9 erreicht werden. Dabei beträgt die Variation der vom zweiten Zugseil 19 auf den Z-Schlitten 9 ausgeübten Kraft innerhalb des gesamten Verfahrbereichs weniger als 0,1%.

Zudem ist die Gewichtsausgleichsvorrichtung mit den in der Tabelle I angegebenen Werten besonders kompakt aufgebaut, insbesondere haben die Primär- und die Sekundärtrommel 17, 18 eine relativ geringe Gesamtbreite, so dass die Vorrichtung ohne weiteres in den Y-Schlitten 7 des Koordinatenmessgeräts 1 integriert werden kann. Ferner ist der minimale Radius der Primär- und der Sekundärtrommel 17, 18, auf den das jeweilige Zugseil 16, 19 aufgewickelt wird, ausreichend groß gewählt, so dass die Lebensdauer der Zugseile 16, 19 nicht erheblich eingeschränkt wird. Um bei dem beschriebenen Ausführungsbeispiel zugleich den Verfahrbereich der Z-Achse von 782 mm zu ermöglichen, ist das Verhältnis zwischen dem maximalen und dem minimalen Wickelradius bei der Primärtrommel 17 etwa 1,5 und bei der Sekundärtrommel 18 etwa 2,5, sowie insgesamt zwischen Sekundär- und Primärtrommel etwa 3,0. Die Zugseile 16, 19 können beispielsweise Stahlseile mit einem jeweiligen Durchmesser von 1,5 mm sein.

Die Masse des Z-Schlittens 9 einschließlich des Tastkopfs 11 und des Tastelements 12, die der zu kompensierenden Gewichtskraft F_{G} entspricht, beträgt bei dem in der Tabelle I angegebenen Beispiel etwa 13 kg. Wenn sich durch einen Wechsel des Tastelements 12 oder des Tastkopfs 11 die auszugleichende Gewichtskraft F_{G} des Z-Schlittens 9 ändert, oder auch zum Ausgleich von Toleranzen, kann durch weiteres Einschrauben oder durch Herausschrauben des Gewindekolbens 15 in die bzw. aus der Schraubenfeder 14 zumindest in einem begrenzten Bereich eine Anpassung der von der Schraubenfeder 14 ausgeübten Kraft erreicht und dadurch die Gewichtskraft F_{G} genauer kompensiert werden. Hierdurch kann in dem angegebenen Beispiel die Länge der ungespannten Schraubenfeder 14 zwischen etwa 300 mm und etwa 390 mm variiert werden und dadurch eine Anpassung an eine Masse des Z-Schlittens 9 im Bereich zwischen etwa 9 kg und etwa 13 kg erreicht werden. Ein etwaiger verbleibender nicht kompensierter oder überkompensierter Anteil der Gewichtskraft F_{G} ist gering und kann vom Antrieb der Z-Achse aufgenommen werden.

Der Übersichtlichkeit halber sind nicht in allen Figuren alle Bezugszeichen dargestellt. Zu einer Figur nicht erläuterte Bezugszeichen haben die gleiche Bedeutung wie in den übrigen Figuren.

### Bezugszeichenliste

- 1: Koordinatenmessgerät
- 2: Tisch
- 3: Säule
- 4, 4': Führung
- 5: X-Schlitten
- 6, 6': Führung
- 7: Y-Schlitten
- 8, 8': Führung
- 9: Z-Schlitten
- 10: Pinole
- 11: Tastkopf
- 12: Tastelement
- 13: Gehäuse
- 14: Schraubenfeder
- 15: Gewindekolben
- 16: Zugseil
- 17: Primärtrommel
- 18: Sekundärtrommel
- 19: Zugseil
- 20: Umlenkrolle
- 21: Außengewinde
- 22: Haken
- 23: Haken
- 24: Trommel
- 25, 25': Lagerzapfen
- 26: Primärspirale
- 27: Sekundärspirale
- 28: Drehachse
- 29: Einstellmutter

**Tabelle I**

| Drehwinkel [°] | Federhub [mm] | Federkraft [N] | Radius Primärspirale [mm] | Radius Sekundär-spirale [mm] | Z-Position [mm] |
|---|---|---|---|---|---|
| 0 | 407 | 343 | 23 | 69 | -782 |
| 30 | 389 | 331 | 23 | 69 | -767 |
| 60 | 371 | 318 | 23 | 68 | -750 |
| 90 | 353 | 306 | 24 | 68 | -731 |
| 120 | 336 | 294 | 24 | 68 | -711 |
| 150 | 318 | 282 | 25 | 67 | -690 |
| 180 | 301 | 270 | 25 | 67 | -667 |
| 210 | 285 | 259 | 26 | 66 | -643 |
| 240 | 268 | 247 | 26 | 65 | -618 |
| 270 | 252 | 236 | 27 | 64 | -592 |
| 300 | 236 | 225 | 27 | 63 | -564 |
| 330 | 220 | 214 | 28 | 62 | -536 |
| 360 | 204 | 203 | 28 | 61 | -507 |
| 390 | 189 | 193 | 29 | 59 | -477 |
| 420 | 174 | 182 | 29 | 58 | -446 |
| 450 | 159 | 172 | 29 | 56 | -415 |
| 480 | 145 | 162 | 30 | 55 | -383 |
| 510 | 130 | 152 | 30 | 53 | -350 |
| 540 | 116 | 142 | 31 | 51 | -316 |
| 570 | 102 | 133 | 31 | 49 | -283 |
| 600 | 89 | 123 | 32 | 47 | -248 |
| 630 | 75 | 114 | 32 | 44 | -214 |
| 660 | 62 | 105 | 33 | 42 | -179 |
| 690 | 49 | 96 | 33 | 39 | -143 |
| 720 | 37 | 87 | 34 | 37 | -108 |
| 750 | 24 | 79 | 34 | 34 | -72 |
| 780 | 12 | 70 | 35 | 31 | -36 |
| 810 | 0 | 62 | 35 | 28 | 0 |

## Patentansprüche

1. Vorrichtung zur Kompensation einer Gewichtskraft (F_{G}) mindestens eines vertikal beweglichen Bauteils eines Koordinatenmessgeräts (1), mit einer Feder, wobei ein erster Endbereich der Feder mit einem vertikal feststehenden Bauteil des Koordinatenmessgeräts (1) verbindbar ist, einem ersten Zugmittel, das mit einem dem ersten Endbereich entgegengesetzten zweiten Endbereich der Feder verbunden ist, einer ersten Trommel, auf der das erste Zugmittel auf- und abwickelbar ist, einer zweiten Trommel, die mit der ersten Trommel drehgekoppelt ist, und einem zweiten Zugmittel, das auf der zweiten Trommel auf- und abwickelbar ist und das zum Aufnehmen zumindest eines Teils der Gewichtskraft (F_{G}) des mindestens einen vertikal beweglichen Bauteils mit diesem verbindbar ist, wobei die erste Trommel näherungsweise konisch ausgebildet ist, sodass das erste Zugmittel an der ersten Trommel mit einem mit zunehmender aufgewickelter Länge des ersten Zugmittels abnehmenden Hebelarm angreift und/oder die zweite Trommel näherungsweise konisch ausgebildet ist, sodass das zweite Zugmittel an der zweiten Trommel mit einem mit zunehmender aufgewickelter Länge des zweiten Zugmittels abnehmenden Hebelarm angreift.

2. Vorrichtung nach Anspruch 1, **dadurch gekennzeichnet, dass** das erste Zugmittel an der ersten Trommel mit einem mit zunehmender aufgewickelter Länge des ersten Zugmittels abnehmenden Hebelarm angreift und das zweite Zugmittel an der zweiten Trommel mit einem mit zunehmender aufgewickelter Länge des zweiten Zugmittels abnehmenden Hebelarm angreift.

3. Vorrichtung nach Anspruch 1 oder 2, **dadurch gekennzeichnet, dass** die auf das zweite Zugmittel übertragene Kraft der Feder im Wesentlichen unabhängig von einer vertikalen Position des mindestens einen vertikal beweglichen Bauteils ist.

4. Vorrichtung nach einem der vorhergehenden Ansprüche, **dadurch gekennzeichnet, dass** bei einer Bewegung des mindestens einen vertikal beweglichen Bauteils über einen gesamten vertikalen Verfahrbereich eine Drehung der zweiten Trommel um mehr als 180°, vorzugsweise um mehr als 360°, besonders bevorzugt um etwa 2 bis 3 volle Umdrehungen erfolgt.

5. Vorrichtung nach einem der vorhergehenden Ansprüche, **dadurch gekennzeichnet, dass** die erste und die zweite Trommel drehfest miteinander verbunden sind.

6. Vorrichtung nach einem der vorhergehenden Ansprüche, **dadurch gekennzeichnet, dass** die erste und/oder die zweite Trommel eine spiralförmige Führungsrille zum Aufwickeln des ersten bzw. des zweiten Zugmittels aufweist.

7. Vorrichtung nach einem der vorhergehenden Ansprüche, **dadurch gekennzeichnet, dass** das Verhältnis zwischen einem maximalen und einem minimalen Radius der zweiten Trommel größer als 1,0 und kleiner als 4,0 ist, vorzugsweise größer als 2,0 und kleiner als 3,0, besonders bevorzugt zumindest näherungsweise gleich 2,5.

8. Vorrichtung nach einem der vorhergehenden Ansprüche, **dadurch gekennzeichnet, dass** das Verhältnis zwischen einem maximalen und einem minimalen Radius der ersten Trommel größer als 1,0 und kleiner als 4,0 ist, vorzugsweise größer als 1,3 und kleiner als 2,0, besonders bevorzugt zumindest näherungsweise gleich 1,5 oder 1,6, und/oder dass das Verhältnis zwischen einem maximalen Radius der ersten oder der zweiten Trommel und einem minimalen Radius der ersten oder der zweiten Trommel größer als 1,0 und kleiner als 4,0 ist, vorzugsweise größer als 2,0 und kleiner als 3,5, besonders bevorzugt zumindest näherungsweise gleich 3,0.

9. Vorrichtung nach einem der vorhergehenden Ansprüche, **dadurch gekennzeichnet, dass** eine wirksame Länge der Feder einstellbar ist.

10. Vorrichtung nach einem der vorhergehenden Ansprüche, **dadurch gekennzeichnet, dass** die Feder als Schraubenfeder (14) ausgebildet ist und dass der erste Endbereich der Feder über einen in diese einschraubbaren Gewindekolben (15) mit dem vertikal feststehenden Bauteil des Koordinatenmessgeräts (1) verbunden ist.

11. Vorrichtung nach einem der vorhergehenden Ansprüche, **dadurch gekennzeichnet, dass** das zweite Zugmittel über mindestens eine Umlenkrolle (20) geführt ist.

12. Verfahren zur Kompensation einer Gewichtskraft (F_{G}) mindestens eines vertikal beweglichen Bauteils eines Koordinatenmessgeräts (1), welches Koordinatenmessgerät (1) eine Feder, deren erster Endbereich mit einem vertikal feststehenden Bauteil des Koordinatenmessgeräts (1) verbunden ist, ein erstes Zugmittel, das mit einem dem ersten Endbereich entgegengesetzten zweiten Endbereich der Feder verbunden ist, eine erste Trommel, auf der das erste Zugmittel auf- und abwickelbar ist, eine zweite Trommel, die mit der ersten Trommel drehgekoppelt ist, und ein zweites Zugmittel aufweist, das auf der zweiten Trommel auf- und abwickelbar ist und das zum Aufnehmen zumindest eines Teils der Gewichtskraft (F_{G}) des mindestens einen vertikal beweglichen Bauteils mit diesem verbunden ist, wobei
- die erste Trommel näherungsweise konisch ausgebildet ist, sodass wenn das mindestens eine vertikal bewegliche Bauteil des Koordinatenmessgeräts (1) in einer vertikalen Richtung entgegen der Gewichtskraft (F_{G}) bewegt wird, das zweite Zugmittel auf der zweiten Trommel aufgewickelt wird, das erste Zugmittel von der ersten Trommel abgewickelt wird und eine Auslenkung der Feder verringert wird, wobei ein Hebelarm, mit dem das erste Zugmittel an der ersten Trommel angreift, zunimmt, und
- wenn das mindestens eine vertikal bewegliche Bauteil des Koordinatenmessgeräts (1) in einer vertikalen Richtung in Richtung der Gewichtskraft (F_{G}) bewegt wird, das zweite Zugmittel von der zweiten Trommel abgewickelt wird, das erste Zugmittel auf der ersten Trommel aufgewickelt wird und eine Auslenkung der Feder vergrößert wird, wobei ein Hebelarm, mit dem das erste Zugmittel an der ersten Trommel angreift, abnimmt und/oder wobei die zweite Trommel näherungsweise konisch ausgebildet ist, sodass
- wenn das mindestens eine vertikal bewegliche Bauteil des Koordinatenmessgerätes in einer vertikalen Richtung entgegen der Gewichtskraft (F_{G}) bewegt wird, das zweite Zugmittel auf der zweiten Trommel aufgewickelt wird, das erste Zugmittel von der ersten Trommel abgewickelt wird und eine Auslenkung der Feder verringert wird, wobei ein Hebelarm, mit dem das zweite Zugmittel an der zweiten Trommel angreift, abnimmt und
- wenn das mindestens eine vertikal bewegliche Bauteil des Koordinatenmessgerätes in einer vertikalen Richtung in Richtung der Gewichtskraft (F_{G}) bewegt wird, das zweite Zugmittel von der zweiten Trommel abgewickelt wird, das erste Zugmittel auf der ersten Trommel aufgewickelt wird und eine Auslenkung der Feder vergrößert wird, wobei ein Hebelarm, mit dem das zweite Zugmittel an der zweiten Trommel angreift, zunimmt.

13. Verfahren nach Anspruch 12, wobei vor der Bewegung des mindestens einen vertikal beweglichen Bauteils in der vertikalen Richtung eine wirksame Länge der Feder eingestellt wird.

14. Koordinatenmessgerät (1) mit mindestens einem vertikal beweglichen Bauteil, umfassend eine Vorrichtung zur Kompensation der Gewichtskraft (F_{G}) des mindestens einen vertikal beweglichen Bauteils gemäß einem der Ansprüche 1 bis 11.

## Claims

1. Device for compensating a weight (F_{G}) of at least one vertically movable component of a coordinate measuring device (1), having a spring, wherein a first end region of the spring can be connected to a vertically fixed component of the coordinate measuring device (1), a first traction means, which is connected to a second end region of the spring, opposite the first end region, a first drum on which the first traction means can be wound and from which it can be unwound, a second drum which is coupled in a rotational fashion to the first drum, and a second traction means which can be wound onto the second drum and unwound therefrom and which is connected to the at least one vertically movable component in order to take up at least part of the weight (F_{G}) thereof, wherein the first drum is approximately conical, such that the first traction means engages on the first drum with a lever arm which decreases as the wound-on length of the first traction means increases, and/or the second drum is approximately conical, such that the second traction means engages the second drum with a lever arm which decreases as the wound-on length of the second traction means increases.

2. Device according to claim 1, **characterised in that** the first traction means engages on the first drum with a lever arm which decreases as the wound-on length of the first traction means increases, and the second traction means engages on the second drum with a lever arm which decreases as the wound-on length of the second traction means increases.

3. Device according to claim 1 or 2, **characterised in that** the force of the spring transmitted to the second traction means is substantially independent of a vertical position of the at least one vertically movable component.

4. Device according to any one of the preceding claims, **characterised in that,** during a movement of the at least one vertically movable component over an entire vertical travel range, a rotation of the second drum by more than 180°, preferably by more than 360°, particularly preferably by about 2 to 3 full revolutions, takes place.

5. Device according to any one of the preceding claims, **characterised in that** the first and the second drum are connected to one another in a rotationally fixed manner.

6. Device according to any one of the preceding claims, **characterised in that** the first and/or the second drum has a spiral-shaped guide groove for winding the first or the second traction means.

7. Device according to any one of the preceding claims, **characterised in that** the ratio between a maximum and a minimum radius of the second drum is greater than 1.0 and less than 4.0, preferably greater than 2.0 and less than 3.0, particularly preferably at least approximately equal to 2.5.

8. Device according to any one of the preceding clams, **characterised in that** the ratio between a maximum and a minimum radius of the first drum is greater than 1.0 and less than 4.0, preferably greater than 1.3 and less than 2.0, particularly preferably at least approximately equal to 1.5 or 1.6, and/or **in that** the ratio between a maximum radius of the first or the second drum and a minimum radius of the first or the second drum is greater than 1.0 and less than 4.0, preferably greater than 2.0 and less than 3.5, particularly preferably at least approximately equal to 3.0.

9. Device according to any one of the preceding claims, **characterised in that** the effective length of the spring can be adjusted.

10. Device according to any one of the preceding claims, **characterised in that** the spring is designed as a coil spring (14) and **in that** the first end region of the spring is connected to the vertically fixed component of the coordinate measuring machine (1) via a threaded piston (15) which can be screwed into the spring.

11. Device according to any one of the preceding claims, **characterised in that** the second traction means is guided via at least one guide pulley (20).

12. Method for compensating a weight (F_{G}) of at least one vertically movable component of a coordinate measuring device (1), which coordinate measuring device (1) has a spring, the first end region of which is connected to a vertically fixed component of the coordinate measuring device (1), a first traction means, which is connected to a second end region of the spring, opposite the first end region, a first drum on which the first traction means can be wound and from which it can be unwound, a second drum which is coupled in a rotational fashion to the first drum, and a second traction means which can be wound onto the second drum and unwound therefrom and which is connected to the at least one vertically movable component in order to take up at least part of the weight (F_{G}) thereof, wherein
- the first drum is approximately conical, such that when the at least one vertically movable component of the coordinate measuring device (1) is moved in a vertical direction against the weight (F_{G}), the second traction means is wound on the second drum, the first traction means is unwound from the first drum, and a deflection of the spring is reduced, wherein a lever arm with which the first traction means engages the first drum increases, and
- when the at least one vertically movable component of the coordinate measuring device (1) is moved in a vertical direction in the direction of the weight (F_{G}), the second traction means is unwound from the second drum, the first traction means is wound on the first drum, and a deflection of the spring is increased, wherein a lever arm with which the first traction means engages the first drum decreases, and/or wherein the second drum is approximately conical, such that
- when the at least one vertically movable component of the coordinate measuring device is moved in a vertical direction against the weight (F_{G}), the second traction means is wound on the second drum, the first traction means is unwound from the first drum, and a deflection of the spring is reduced, wherein a lever arm with which the second traction means engages the second drum decreases, and
- when the at least one vertically movable component of the coordinate measuring device is moved in a vertical direction in the direction of the weight (F_{G}), the second traction means is unwound from the second drum, the first traction means is wound on the first drum, and a deflection of the spring is increased, wherein a lever arm with which the second traction means engages the second drum increases.

13. Method according to claim 12, wherein before the movement of the at least one vertically movable component in the vertical direction, an effective length of the spring is adjusted.

14. Coordinate measuring device (1) having at least one vertically movable component, comprising a device for compensating the weight (F_{G}) of the at least one vertically movable component according to any one of claims 1 to 11.

## Revendications

1. Dispositif de compensation d'une force de poids (F_{G}) d'au moins un composant mobile verticalement d'un appareil de mesure de coordonnées (1), avec un ressort, dans lequel une première zone d'extrémité du ressort peut être reliée à un composant verticalement immobile de l'appareil de mesure de coordonnées (1), un premier moyen de traction, qui est relié à une deuxième zone d'extrémité du ressort opposée à la première zone d'extrémité, un premier tambour, sur lequel le premier moyen de traction peut être enroulé et déroulé, un deuxième tambour, qui est couplé en rotation au premier tambour, et un deuxième moyen de traction, qui peut être enroulé et déroulé sur le deuxième tambour et qui peut être relié, pour recevoir au moins une partie de la force de poids (F_{G}) de l'au moins un composant verticalement mobile, à celui-ci, dans lequel le premier tambour est réalisé de manière approximativement conique si bien que le premier moyen de traction s'engage sur le premier tambour avec un bras de levier diminuant au fur et à mesure que la longueur enroulée du premier moyen de traction augmente et/ou le deuxième tambour est réalisé de manière approximativement conique de sorte que le deuxième moyen de traction s'engage sur le deuxième tambour avec un bras de levier diminuant au fur et à mesure que la longueur enroulée du deuxième moyen de traction augmente.

2. Dispositif selon la revendication 1, **caractérisé en ce que** le premier moyen de traction s'engage sur le premier tambour avec un bras de levier diminuant au fur et à mesure que la longueur enroulée du premier moyen de traction augmente et le deuxième moyen de traction s'engage sur le deuxième tambour avec un bras de lever diminuant au fur et à mesure que la longueur enroulée du deuxième moyen de traction augmente.

3. Dispositif selon la revendication 1 ou 2, **caractérisé en ce que** la force du ressort transmise sur le deuxième moyen de traction est sensiblement indépendante d'une position verticale de l'au moins un composant mobile verticalement.

4. Dispositif selon l'une quelconque des revendications précédentes, **caractérisé en ce que** lors d'un déplacement de l'au moins un composant mobile verticalement sur la totalité d'une zone de déplacement verticale, une rotation du deuxième tambour de plus de 180°, de préférence de plus de 360°, de manière particulièrement préférée d'environ 2 à 3 tours complets est effectuée.

5. Dispositif selon l'une quelconque des revendications précédentes, **caractérisé en ce que** le premier et le deuxième tambour sont reliés l'un à l'autre de manière solidaire en rotation.

6. Dispositif selon l'une quelconque des revendications précédentes, **caractérisé en ce que** le premier et/ou le deuxième tambour présentent une rainure de guidage en forme de spirale pour enrouler le premier ou le deuxième moyen de traction.

7. Dispositif selon l'une quelconque des revendications précédentes, **caractérisé en ce que** le rapport entre un rayon maximal et un rayon minimal du deuxième tambour est supérieur à 1,0 et est inférieur à 4,0, de préférence est supérieur à 2,0 et est inférieur à 3,0, de manière particulièrement préférée est égal au moins approximativement à 2,5.

8. Dispositif selon l'une quelconque des revendications précédentes, **caractérisé en ce que** le rapport entre un rayon maximal et un rayon minimal du premier tambour est supérieur à 1,0 et est inférieur à 4,0, de préférence est supérieur à 1,3 et est inférieur à 2,0, de manière particulièrement préférée est égal au moins approximativement à 1,5 ou 1,6, et/ou que le rapport entre un rayon maximal du premier ou du deuxième tambour et un rayon minimal du premier ou du deuxième tambour est supérieur à 1,0 et est inférieur à 4,0, de préférence est supérieur à 2,0 et est inférieur à 3,5, de manière particulièrement préférée est égal au moins approximativement à 3,0.

9. Dispositif selon l'une quelconque des revendications précédentes, **caractérisé en ce qu'**une longueur active du ressort peut être réglée.

10. Dispositif selon l'une quelconque des revendications précédentes, **caractérisé en ce que** le ressort est réalisé en tant qu'un ressort hélicoïdal (14), et que la première zone d'extrémité du ressort est reliée au composant verticalement immobile de l'appareil de mesure de coordonnées (1) par l'intermédiaire d'un piston fileté (15) pouvant être vissé dans celui-ci.

11. Dispositif selon l'une quelconque des revendications précédentes, **caractérisé en ce que** le deuxième moyen de traction est guidé par l'intermédiaire d'une poulie de renvoi (20).

12. Procédé de compensation d'une force de poids (F_{G}) d'au moins un composant verticalement mobile d'un appareil de mesure de coordonnées (1), lequel appareil de mesure de coordonnées (1) présente un ressort, dont la première zone d'extrémité est reliée à un composant verticalement immobile de l'appareil de mesure de coordonnées (1), un premier moyen de traction, qui est relié à une deuxième zone d'extrémité du ressort opposée à la première zone d'extrémité, un premier tambour, sur lequel le premier moyen de traction peut être enroulé et déroulé, un deuxième tambour, qui est couplé en rotation au premier tambour, et un deuxième moyen de traction, qui peut être enroulé et déroulé sur le deuxième tambour et qui est relié, pour recevoir au moins une partie de la force de poids (F_{G}) de l'au moins un composant verticalement mobile, à celui-ci, dans lequel
- le premier tambour est réalisé de manière approximativement conique si bien que lorsque l'au moins un composant verticalement mobile de l'appareil de mesure de coordonnées (1) est déplacé dans une direction verticale à l'encontre de la forcée de poids (F_{G}), le deuxième moyen de traction est enroulé sur le deuxième tambour, le premier moyen de traction est déroulé du premier tambour et une déviation du ressort est réduite, dans lequel un bras de levier, avec lequel le premier moyen de traction s'engage sur le premier tambour, augmente, et
- lorsque l'au moins un composant verticalement mobile de l'appareil de mesure de coordonnées (1) est déplacé dans une direction verticale en direction de la force de poids (F_{G}), le deuxième moyen de traction est déroulé du deuxième tambour, le premier moyen de traction est enroulé sur le premier tambour et une déviation du ressort est agrandie, dans lequel un bras de levier, avec lequel le premier moyen de traction s'engage sur le premier tambour, diminue, et/ou dans lequel le deuxième tambour est réalisé de manière approximativement conique, si bien que
- lorsque l'au moins un composant verticalement mobile de l'appareil de mesure de coordonnées est déplacé dans une direction verticale à l'encontre de la force de poids (F_{G}), le deuxième moyen de traction est enroulé sur le deuxième tambour, le premier moyen de traction est déroulé du premier tambour, et une déviation du ressort est réduite, dans lequel un bras de levier, avec lequel le deuxième moyen de traction s'engage sur le deuxième tambour, diminue, et
- lorsque l'au moins un composant verticalement mobile de l'appareil de mesure de coordonnées est déplacé dans une direction verticale en direction de la force de poids (F_{G}), le deuxième moyen de traction est déroulé du deuxième tambour, le premier moyen de traction est enroulé sur le premier tambour et une déviation du ressort est agrandie, dans lequel un bras de levier, avec lequel le deuxième moyen de traction s'engage sur le deuxième tambour, augmente.

13. Procédé selon la revendication 12, dans lequel une longueur active du ressort est réglée avant le déplacement de l'au moins un composant verticalement mobile dans la direction verticale.

14. Appareil de mesure de coordonnées (1) avec au moins un composant verticalement mobile, comprenant un dispositif de compensation de la force de poids (F_{G}) de l'au moins un composant verticalement mobile selon l'une quelconque des revendications 1 à 11.
